# EUROPEAN PATENT APPLICATION

(11) **EP 1 627 674 A1**
(43) Date of publication of application: **22.02.2006**
(21) Application number: 05076788.8
(22) Date of filing: 02.08.2005
(51) Int. Cl.: B01D 24/16, B01D 24/48

(54) **Filter assembly**

(30) Priority: 02.08.2004 NL 1026770
(71) Applicant: Mönch, Hartmut, 7004 HE Doetinchem (NL)
(72) Inventor: Mönch, Hartmut, 7004 HE Doetinchem (NL)
(74) Representative: De Hoop, Eric

(57) **Abstract**

The invention relates to a filter assembly for filtering a liquid, comprising: a reservoir comprising a bottom wall, a sieve wall spaced apart from the bottom wall for placing a filter substrate on the sieve wall, and side walls substantially fully enclosing the bottom wall and the sieve wall, wherein the side walls extend at a side of the sieve wall facing away from the bottom wall for accommodating the filter substrate therein, and wherein the reservoir is adapted for planting plants, particularly helophytes, in the filter substrate; a supply device for supplying the liquid in fouled condition between the bottom wall and the sieve wall; and a first discharge device for discharging the liquid placed near the upper side of the side walls.

## Description

The invention relates to a filter assembly, particularly for filtering water, among others surface water of for instance an ornamental pond, swimming pond or a fish-breeding pond, groundwater and/or waste water, such as sewage water.

European patent application 0 586 805 describes a filter for pond water and the like, comprising a reservoir having a bottom wall and side walls enclosing the bottom wall. The reservoir is divided by a partition wall into a first reservoir part and a second reservoir part, wherein the partition wall is provided with a through-opening near the bottom wall. The second reservoir part contains a sieve wall spaced apart from the bottom wall on which sieve wall a filter substrate is placed.

The water to be filtered is supplied to the first reservoir part via the upper side of the reservoir. Via the through-opening of the partition wall the water is able to flow to the second reservoir part. Subsequently the water flows upwards through the sieve wall, through the filter substrate. The water is purified by the filter substrate, and the purified water can flow back to the pond at the upper side of the second reservoir part, above the filter substrate.

In one embodiment the first reservoir part is provided with a discharge for discharging water and accumulated dirt from the reservoir. In a further embodiment the filter substrate is provided with plants planted therein.

The filter substrate of such filter devices will in the course of time silt up by the dirt caught from the filtered water by the filter substrate. A drawback of the known filter device is that during silting up the flow resistance of the water through the second reservoir part becomes increasingly larger. As a result the flow-through of the filter substrate and thus the quantity of filtered water per time unit will in the long run become increasingly less. In case the flow rate of the filtered water becomes lower than the flow rate of the supplied water, the supplied water in the first reservoir part will flow over to the second reservoir part at the upper side of the partition, as a result of which unpurified water can flow back to the pond. For at least partially restoring the original filter action the filter substrate needs to be partially or fully replaced.

A further drawback of the known filter device, when provided with plants planted in the filter substrate, is that when restoring the filter action the plants need to be removed as well and be planted again in the new filter substrate.

It is an object of the invention to improve on at least one of these aspects.

To that end the invention provides a filter assembly for filtering a liquid, comprising:
a reservoir comprising a bottom wall, a sieve wall spaced apart from the bottom wall for placing a filter substrate on the sieve wall, and side walls substantially fully enclosing the bottom wall and the sieve wall, wherein the side walls extend at a side of the sieve wall facing away from the bottom wall for accommodating the filter substrate therein, and wherein the reservoir is adapted for planting plants, particularly helophytes, in the filter substrate,
a supply device for supplying the liquid in fouled condition between the bottom wall and the sieve wall, and
a first discharge device for discharging the liquid placed near the upper side of the side walls.

In the filter device according to the invention the sieve wall thus extends over the entire reservoir, and thus forms a supply space between the bottom wall and the sieve wall that are fully enclosed by the side walls. The waste water is supplied directly to said supply space between the bottom wall and the sieve wall via the supply device, such as for instance a supply line. When operative as is usual, the liquid to be purified, such as for instance pond water, is only able to leave the filter device through the sieve wall and via the filter substrate. Thus it is impossible for unpurified liquid to end up in the first discharge device. In case of use in an ornamental pond, swimming pond or fish-breeding pond it can thus be prevented that unpurified water flows back to the pond via the first discharge device.

The reservoir of the filter device according to the invention is adapted for planting plants, for instance helophytes, in the filter substrate. For planting plants in the filter substrate the filter device may, among others, comprise means for supplying or allowing light to the side of the filter substrate facing away from bottom wall. In one embodiment the filter assembly can be provided with a lid having lighting means or with an at least partially transparent lid for supplying light to the plants planted in the filter substrate. In a simple embodiment the reservoir is substantially open at an upper side facing away from the bottom wall.

A further advantage of the filter device according to the invention is that it is suitable to lead the liquid to be purified under pressure through the filter device. To that end an embodiment of the supply device of the filter device according to the invention comprises a pump for supplying the liquid under pressure between the bottom wall and the sieve wall. In this way a filter capacity, such as the quantity of purified liquid per time unit, of a filter device according to this embodiment can be larger than the filter capacity of a known filter of comparable dimensions.

In one embodiment the filter assembly further comprises a second closable discharge device for discharging the liquid between the bottom wall and the sieve wall. Via said second closable discharge device the filter assembly can be rinsed out properly and easily.

In one embodiment the second closable discharge device is placed in the bottom wall. Preferably the second closable discharge device can be coupled to a sewer line. Heavy elements in the liquid to be filtered can be collected in the supply space under the sieve wall before they end up in the filter substrate. Said heavy elements settle on the bottom wall of the reservoir, at the bottom of the filter assembly. During a rinsing action, wherein the second discharge device is opened, said settled heavy elements may subsequently be discharged via said second discharge device to a sewer line.

In one embodiment the second closable discharge device is placed at a side of the bottom wall facing away from supply device. As a result, during the rinsing action, the liquid of the supply device will flow over at least a part of the bottom wall to the second discharge device and the liquid is able to take along and discharge the elements settled on the bottom wall via the second discharge device.

In one embodiment the bottom wall is placed, at least partially, at a fall to the second closable discharge device. The bottom wall thus comprises a wall section sloping towards the second discharge opening, for guiding elements settled on the bottom wall towards said second discharge opening.

In one embodiment the supply device comprises a closing device for during rinsing the reservoir stopping the supply of fouled liquid. In a further embodiment the filter assembly comprises a supply placed near the upper side of the side walls for supplying at least partially purified liquid while rinsing the filter substrate during rinsing. As a result more than just the liquid present in the reservoir for rinsing can be passed through the filter substrate. By supplying extra liquid to the upper side of the filter substrate, the filter substrate is cleaned more properly during rinsing.

In a simple embodiment, particularly for filtering surface water, such as for instance an ornamental pond or a fish-breeding pond, the first discharge device is adapted for connecting the reservoir and the surface water so as to mutually communicate. In that way the water is able to flow from the reservoir to the surface water and vice versa. As a result the first discharge device, during a rinsing action, may serve as supply for at least partially purified liquid. In the rinsing action described above liquid present in the reservoir and liquid flowing via the second discharge device from the surface water to the reservoir, is able to at least rinse away and discharge a part of the dirt collected in the filter substrate via the second discharge device.

In one embodiment the filter assembly comprises an indicator for indicating a liquid pressure of the liquid under the sieve wall. In a simple embodiment the indicator comprises a standpipe connecting with an opening in the sieve wall and extending to above the filter substrate.

The standpipe and the filter substrate thus form flow paths placed parallel. Because of said standpipe preferably a very small part of the liquid to be filtered supplied via the supply device will flow through the standpipe. If the filter substrate threatens to silt up, the liquid pressure under the sieve wall will increase, and the liquid will flow through the standpipe under said increasing pressure. Said liquid will thus squirt out of the end of the standpipe protruding above the filter substrate, just like for instance a fountain. The more the filter substrate silts up the higher the pressure in the supply space becomes, the higher the liquid will squirt out of the standpipe. The way the liquid squirts out of the standpipe therefore is an indication of the degree of silting up of the filter substrate.

In one embodiment the indicator comprises a sensor. The sensor can be connected to an operating system. In one embodiment of the filter assembly having such an operating system it can be adapted for controlling the pump and/or stop valve of the second discharge device and/or a stop valve in the supply device and/or the supply of rinsing liquid. Thus the filter assembly can be automated so that the filter substrate and the supply space are automatically rinsed when registering a predetermined pressure corresponding with a certain degree of silting up, after which the system automatically activates rinsing.

From a further aspect the invention provides a use of a filter assembly as described above for filtering surface water, such as for instance an ornamental pond, a swimming pond or a fish-breeding pond, groundwater and/or waste water, wherein the reservoir can be placed recessed into the ground.

The filter assembly can be placed near the surface water, wherein the supply device and the first discharge device are connected to the surface water, and wherein the reservoir is filled with a filter substrate. The reservoir can connect to the circumference of the surface water.

Plants, such as helophytes, are planted in the filter substrate. In the latter case there is question of a helophyte filter.

Thus the invention offers a filter assembly having various advantages with respect to the known filter devices.

For fish farms and fish fatteners the known previous embodiments of helophyte filters could not be used very well due to the accumulation of the fishes' faeces in the substrate as a result of which the water quality deteriorated very quickly in a mere 5 to 6 weeks. The filter assembly according to the invention makes it possible to rinse the filter after a period, which rinsing takes up little time.

With respect to other filters in aqua culture this is a cheap system having excellent mechanical and biological properties.

For purifying domestic waste water a so-called iba system can be used. In environmentally friendly iba systems the last filter usually is a helophyte filter. After a number of years they have to be replaced as a result of silting up. In the new filter system according to the invention this is no longer necessary. It is possible that the septic tanks used in the current iba systems can be replaced by the new helophyte filter.

For purifying water in swimming ponds filter substrates of 1 to 1.5 meter are used in known filters, the purpose being to store as much dirt as possible and secondly to prevent root growth of the marsh plants in the drainage pipe. In the new filter assembly in which the liquid flows in upward direction through the filter substrate, the plant roots grow more horizontally and a substrate thickness of 60 cm suffices. The reservoir of the filter assembly according to the invention therefore can be less deep. As moreover the filter substrate in the filter assembly according to the invention is regularly cleaned, the dirt accumulation is negligible. Therefore a thick substrate package is not required either.

In older swimming ponds there often is a lot of algal growth in the water as the plants are no longer capable of processing the accumulation of organic dirt (after 2 to 3 years) in the filter. The idea was that anaerobic parts would arise in the filter that would remove the nitrate, in practice it turned out that this process does not take place. In the filter assembly according to the invention an accumulation of organic dirt can be prevented by rinsing and thus a large quantity of nitrate is avoided and as a result there is little algal growth.

The invention as described above will be elucidated below on the basis of the exemplary embodiments of a building according to the invention shown in the attached drawings, in which:
Figure 1 shows a schematic view in perspective of a filter assembly according to the invention;
Figure 2 shows a schematic view in cross-section of the filter assembly according to figure 1, wherein a pump is placed in the supply line;
Figure 3 shows a schematic view in cross-section of a further exemplary embodiment provided with a second discharge device;
Figure 4 shows a schematic view in cross-section of an exemplary embodiment provided with a standpipe;
Figure 5 shows a schematic view in cross-section of an exemplary embodiment provided with a sensor and an operating device;
Figure 6 shows a schematic view in cross-section of an alternative exemplary embodiment provided with a sensor and an operating device, and furthermore provided with a supply for rinsing liquid;
Figures 7 and 8 show a schematic view in cross-section of an alternative exemplary embodiment wherein the bottom wall is placed at a fall; and
Figure 9 shows a schematic view in cross-section of an alternative exemplary embodiment wherein the reservoir comprises a substantially translucent covering means.

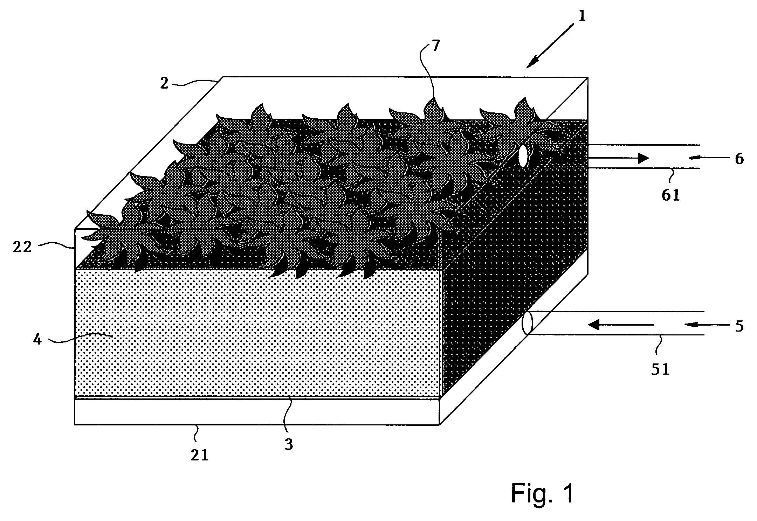

The first exemplary embodiment of the filter assembly 1 according to the invention is shown in figure 1. The filter assembly comprises a reservoir 2 having a bottom wall 21 and side walls 22, and a sieve wall 3 spaced apart from the bottom wall 21. A filter substrate 4 is placed on the filter wall. The liquid to be filtered is supplied between the bottom wall 21 and the sieve wall 3 by means of a supply device 5 in the form of a supply pipe 51. The purified water is discharged by means of a first discharge device 6 in the form of a first discharge pipe 61. Plants 7 have been planted in the filter substrate 4.

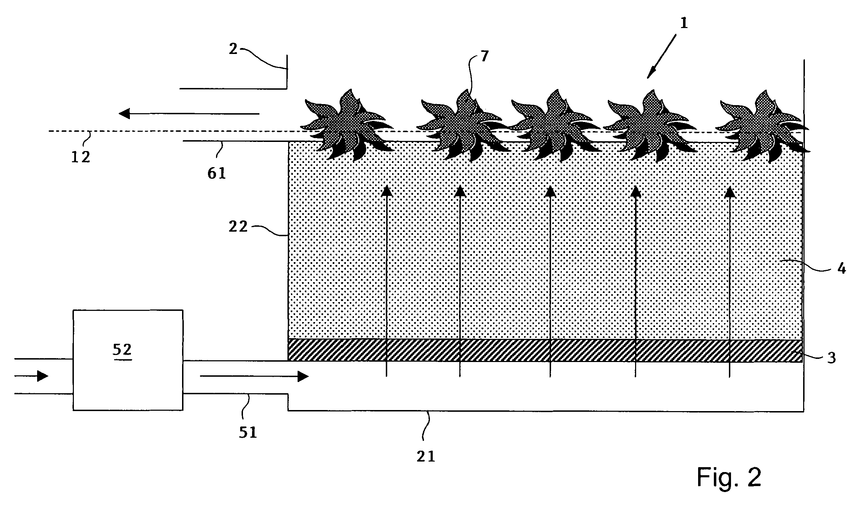

In a second further exemplary embodiment, as shown in figure 2, the supply device 5 is provided with a pump 52 for passing the liquid through the filter substrate 4 under pressure.

In a use of this exemplary embodiment for filtering for instance surface water, the reservoir 2 is placed in communication with the surface water, for instance by placing the reservoir such that the discharge 61 is situated at least partially below the water level 12 of the surface water.

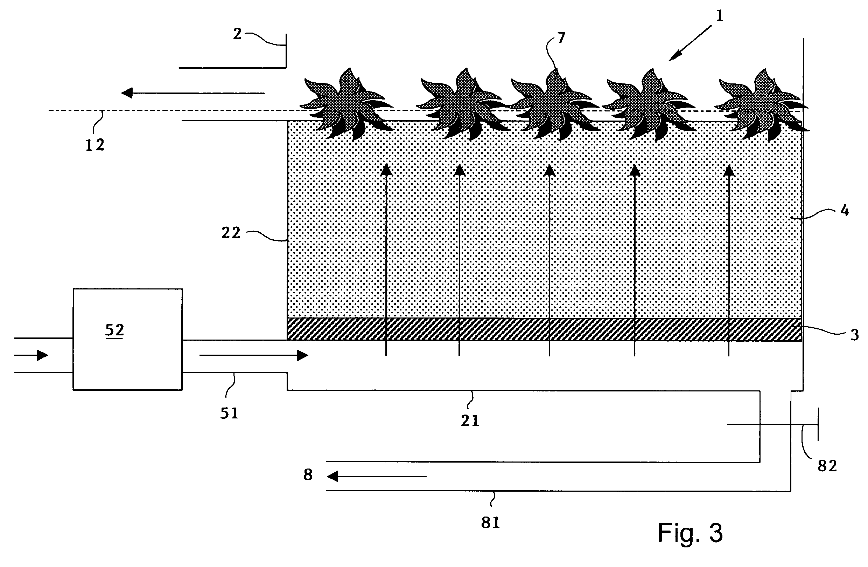

In a third exemplary embodiment, as shown in figure 3, the bottom wall 21 is provided with a second discharge device 8 in the form of a discharge pipe 81 provided with a closing device 82. Said discharge pipe 81 can be connected to the sewage system (not shown)

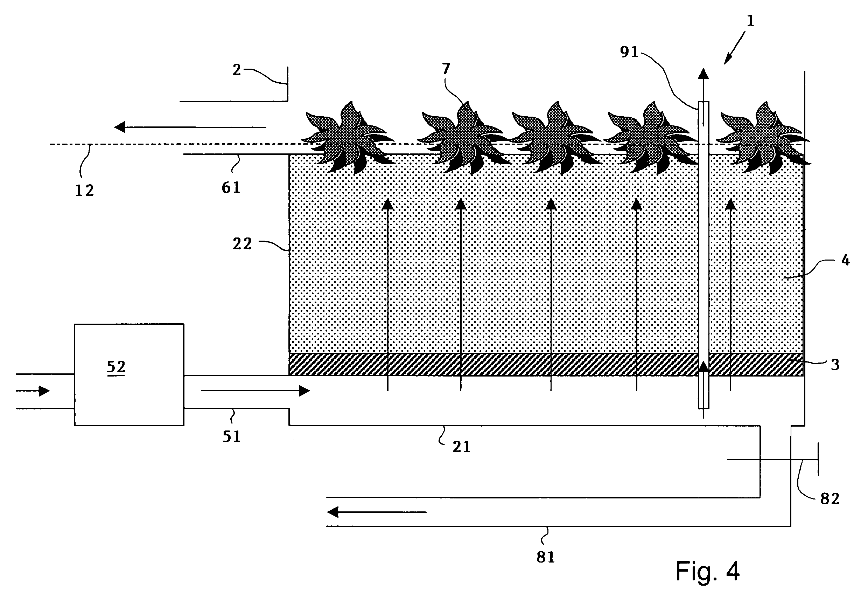

In a fourth exemplary embodiment, as shown in figure 4, the filter assembly is provided with an indicator 9 in the form of a standpipe 91. If the filter substrate silts up at least partially, the pressure of the liquid under the sieve wall 3 will increase, as a result of which the liquid will squirt out of the standpipe.

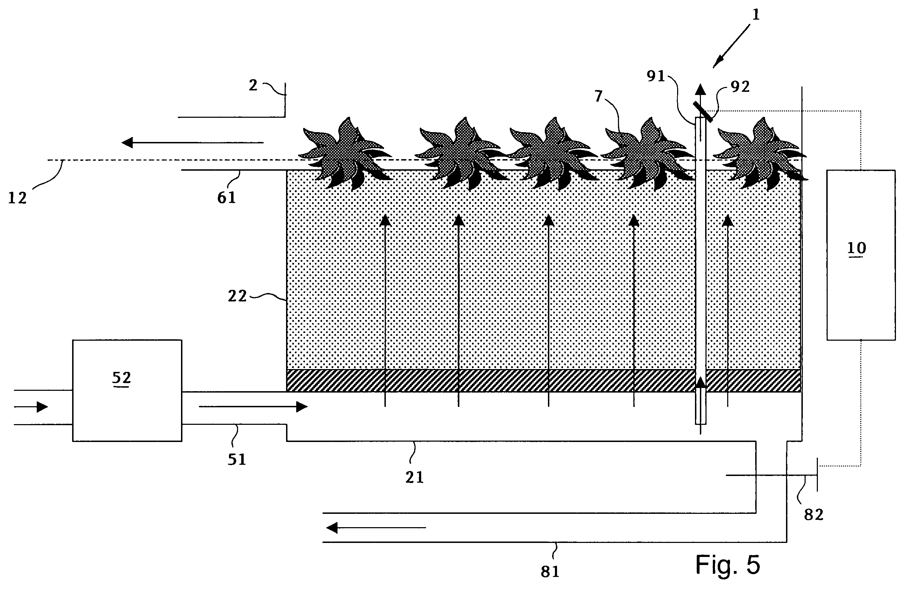

In a further exemplary embodiment, as shown in figure 5, the filter assembly 1 is provided with a sensor in the form of a valve 92, and an operating system 10. The valve 92 is provided with a switch, for instance a relay contact, which switch can be operated by the valve 92. If the pressure between the bottom wall 21 and the sieve wall 3 exceeds a certain predetermined pressure, the liquid will push open the valve 92 via the standpipe 91, wherein the switch is operated and a signal is transmitted to the operating system 10. The operating system 10 subsequently activates a rinsing process, by opening the closing device 82 in the second discharge pipe 81. When a predetermined period of time has passed the operating system 10 will end the rinsing process by closing the closing device 82 again.

A further advantage of the device as shown in figure 5 is that the valve 92 is also able to serve as overpressure valve.

When using the filter assembly 1 in, for instance ponds, such as swimming ponds and fish-breeding ponds, the operating system 10 can be connected with a closing device of a supply device for supplying water to a pond (not shown). Said closing device can be operated by the operating system 10 after the rinsing process prior to topping up the pond.

The operating system 10 can furthermore be connected to the pump 52. During a rinse the pump 52 can be switched off by the operating system 10 so that the supply of liquid via the supply device 5 is at least to large degree stopped. Subsequently the closing device 82 is opened and the liquid that is still in the reservoir 2 and dirt taken along by this liquid, can be flushed away via the discharge pipe 81.

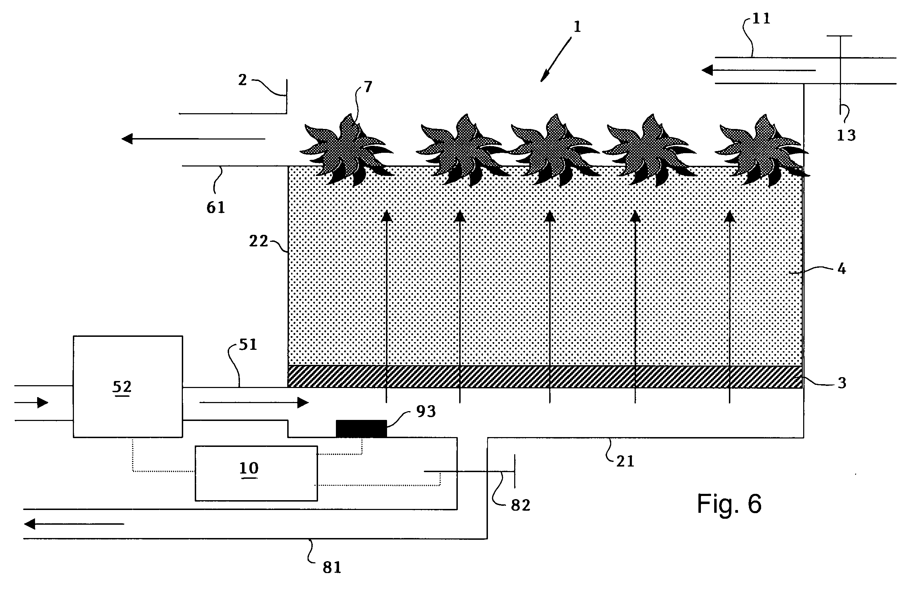

In a further exemplary embodiment as shown in figure 6 the filter assembly 1 is provided with a sensor in the form of a pressure gauge 93, and an operating system 10. The pressure gauge 93 measures the pressure between the bottom wall 21 and the sieve wall 3 and transmits this to the operating system 10. The operating system 10 compares the measured value of the pressure with the set value and activates a rinse when the measured pressure of the pressure gauge 93 exceeds the set value.

The exemplary embodiment according to figure 6 is also provided with a supply 11 for supplying extra rinsing liquid during a rinse and/or liquid for topping up after a rinse. The supply 11 is provided with a closing device 13 that can be connected to the operating system 10 so that the closing device 13 is operable by the operating system 10. Such a supply 11 may of course also be placed in the other exemplary embodiments.

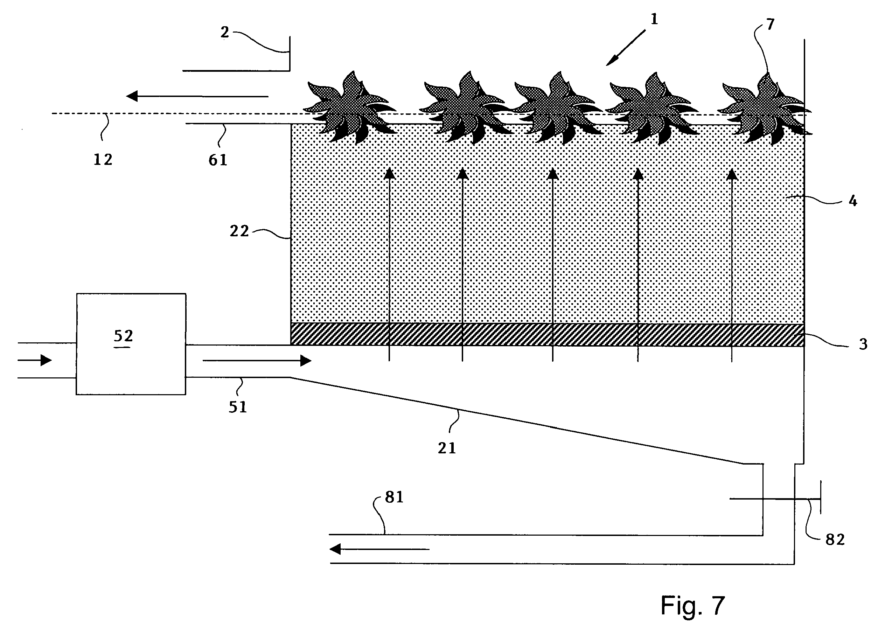

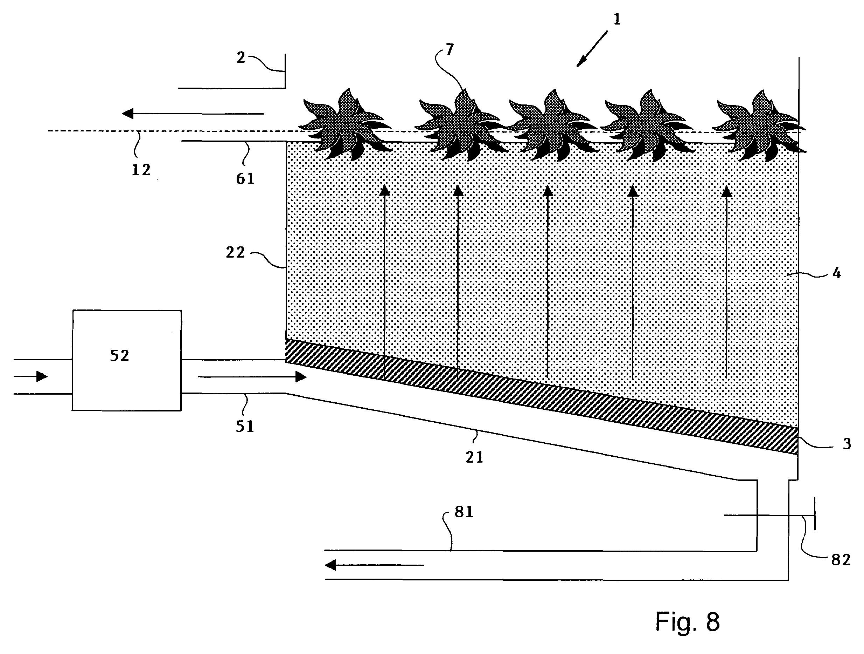

The exemplary embodiments as shown in the figures 7 and 8 are provided with a bottom wall 21 placed at a fall, wherein the bottom wall 21 slopes in the direction of the connection of the discharge 81. In this case the sieve wall 3 may be placed substantially horizontally, as shown in figure 7. The sieve wall 3, just like the bottom wall 21, can also be placed at a fall, as shown in figure 8. Such a bottom wall 21 placed at a fall can of course also be used in the other exemplary embodiments.

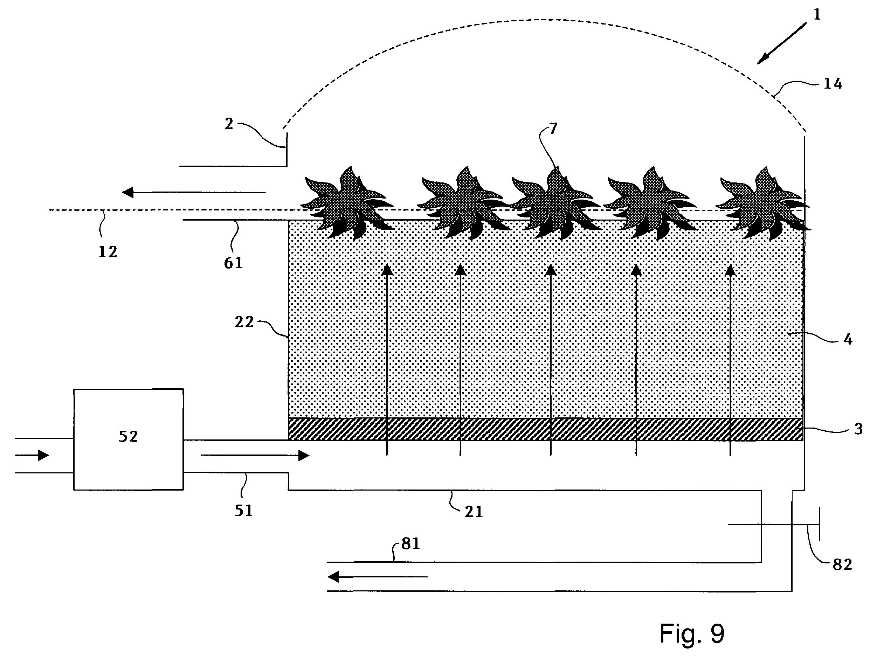

Finally an exemplary embodiment is shown in figure 9 wherein the reservoir is covered by a translucent dome 14, for instance made of synthetic material. In this way the plants 7 can at least be partially protected from the outside air, as a result of which this variety of the filter assembly according to the invention can also be used in countries with less favourable climate conditions.

It is noted that the embodiments of the invention described above are intended to illustrate the invention and not to limit the invention. An expert will certainly be capable of designing alternative embodiments that fall within the scope of protection of the attached claims.

For instance the reservoir as shown in the figures has a substantially rectangular shape. In an alternative embodiment the reservoir, at least considered in a top view, may have a more natural shape, such as for instance known from the synthetic pre-shaped ponds. As a result the filter device looks more like natural planting of the banks or marshland adjacent to the pond.

## Claims

1. Filter assembly for filtering a liquid, comprising:
a reservoir comprising a bottom wall, a sieve wall spaced apart from the bottom wall for placing a filter substrate on the sieve wall, and side walls substantially fully enclosing the bottom wall and the sieve wall, wherein the side walls extend at a side of the sieve wall facing away from the bottom wall for accommodating the filter substrate therein, and wherein the reservoir is adapted for planting plants, particularly helophytes, in the filter substrate,
a supply device for supplying the liquid in fouled condition between the bottom wall and the sieve wall, and
a first discharge device for discharging the liquid placed near the upper side of the side walls.

2. Filter assembly according to claim 1, wherein the reservoir is substantially open at an upper side facing away from the bottom wall.

3. Filter assembly according to claim 1 or 2, wherein the supply device comprises a pump for supplying the liquid under pressure between the bottom wall and the sieve wall.

4. Filter assembly according to claim 1, 2 or 3, wherein the reservoir comprises a second closable discharge device for discharging the liquid between the bottom wall and the sieve wall, wherein the second closable discharge device is preferably placed in the bottom wall, wherein the second closable discharge device preferably can be coupled to a sewer line.

5. Filter assembly according to claim 4, wherein the second closable discharge device is placed at a side of the bottom wall facing away from supply device, and wherein the bottom wall is placed, at least partially, at a fall to the second closable discharge device.

6. Filter assembly according to any one of the preceding claims, wherein the filter assembly comprises an indicator for indicating a liquid pressure of the liquid under the sieve wall.

7. Filter assembly according to claim 6, wherein the indicator comprises a standpipe connecting with an opening in the sieve wall and extending to above the filter substrate.

8. Filter assembly according to claim 6 or 7, wherein the indicator comprises a sensor, wherein the sensor is connected to an operating system, wherein the operating system is adapted for controlling the pump and/or stop valve of the second discharge device.

9. Filter assembly according to any one of the preceding claims for filtering surface water, such as for instance an ornamental pond or a fish-breeding pond, wherein the first discharge device is adapted for connecting the reservoir and the surface water so as to mutually communicate.

10. Use of a filter assembly according to any one of the preceding claims for filtering surface water, groundwater and/or waste water, wherein the reservoir is placed substantially recessed into the ground.
